# EUROPEAN PATENT APPLICATION

(11) **EP 4 376 146 A1**
(43) Date of publication of application: **29.05.2024**
(21) Application number: 23749918.1
(22) Date of filing: 18.01.2023
(51) Int. Cl.: H01M 10/052, H01M 4/36, H01M 4/58, H01M 4/525, H01M 4/38, H01M 10/42

(54) **LITHIUM SECONDARY BATTERY**

(30) Priority: 03.02.2022 KR 20220014470
(71) Applicant: LG Energy Solution, Ltd., Seoul 07335 (KR)
(72) Inventor: KIM, Young Deok, Daejeon 34122 (KR); KIM, Dae Soo, Daejeon 34122 (KR)
(74) Representative: Hoffmann Eitle
(86) International application number: PCT/KR2023/000870
(87) International publication number: WO 2023/149685

(57) **Abstract**

A lithium secondary battery according to the present invention includes a positive electrode including a positive electrode active material layer and a negative electrode including a negative electrode active material layer, wherein the negative electrode active material layer includes a negative electrode active material, and the negative electrode active material consists of silicon, and in a graph of capacity-voltage measured by manufacturing a half-cell including the positive electrode and a lithium metal electrode and then discharging the half-cell at a constant current of 0.1 C, an inflection point appears in a region in which a voltage is 3.3 V to 3.7 V, and the capacity of the positive electrode at the inflection point is 3% to 25% of the capacity of the positive electrode at a final charge voltage.

## Description

### TECHNICAL FIELD

### Cross-reference to Related Applications

This application claims the benefit of Korean Patent Application No. 10-2022-0014470, filed on February 3, 2022, in the Korean Intellectual Property Office, the disclosure of which is incorporated herein in its entirety by reference.

### Technical Field

The present invention relates to a lithium secondary battery, and more particularly, to a lithium secondary battery including a negative electrode active material consisting of silicon.

### BACKGROUND ART

As the technology development and demand for electric vehicles and energy storage systems (ESS) have increased, the demand for secondary batteries as an energy source has been rapidly increased, and accordingly, various studies have been conducted on batteries which may meet various needs. Particularly, studies have been actively conducted on a lithium secondary battery as a power source for such devices, which has high energy density and excellent lifespan and cycle properties.

Generally, a lithium secondary battery includes a positive electrode, a negative electrode, a separator interposed between the positive electrode and the negative electrode, an electrolyte, an organic solvent, and the like. On respective current collectors of the positive electrode and the negative electrode, an active material layer including a positive electrode active material or a negative electrode active material may be formed. As the positive electrode active material, a lithium-containing metal oxide such as lithium iron phosphate or a lithium nickel-based oxide is generally used, and as the negative electrode active material, a carbon-based active material or a silicon-based active material, which does not contain lithium, is used.

Particularly, among negative electrode active materials, a silicon-based active material has a capacity which is about 10 times higher than that of a carbon-based active material, and thus has an advantage of implementing a high energy density even with a thin electrode. However, the silicon-based active material accompanies rapid volume expansion/contraction due to a change in crystal structure caused by lithium intercalation/deintercalation during battery charging and discharging, and accordingly, there is a problem in that electrical contacts between particles are broken, thereby degrading lifespan properties of the lithium secondary battery. Particularly, a pulverization phenomenon of silicon particles is accelerated due to a change in volume caused by a rapid change in potential in a negative electrode high-potential region (a region exceeding 0.6 V), which is a main cause of degradation in lifespan of a battery.

In order to solve the above problem, a method has been proposed in which the high-potential region of a negative electrode which accompanies a rapid change in volume of silicon is not used by setting a cut-off voltage to 3.3 V or higher in a lithium secondary battery in which a lithium nickel-based oxide is used as a positive electrode active material and silicon (pure Si 100%) is used as a negative electrode active material. However, when a cut-off voltage is set high as described above, there is a problem in that a cell energy density is lowered, thereby making it difficult to implement a high-capacity battery.

Therefore, there is a demand to develop a lithium secondary battery with improved lifespan properties while minimizing the degradation in cell energy density.

### DISCLOSURE OF THE INVENTION

### TECHNICAL PROBLEM

The present invention is to solve the above problems, and an object of the present invention is to minimize the degradation in energy density of a cell to which a silicon negative electrode active material is applied, and to implement excellent lifespan properties of the cell by using a positive electrode having a specific discharge behavior.

### TECHNICAL SOLUTION

According to an aspect of the present invention, there is provided a lithium secondary battery which includes a positive electrode including a positive electrode active material layer and a negative electrode including a negative electrode active material layer, wherein the negative electrode active material layer includes a negative electrode active material, and the negative electrode active material consists of silicon, and in a graph of capacity-voltage measured by manufacturing a half-cell including the positive electrode and a lithium metal electrode and then discharging the half-cell at a constant current of 0.1 C, an inflection point appears in a region in which a voltage is 3.3 V to 3.7 V, and the capacity of the positive electrode at the inflection point is 3% to 25% of the capacity of the positive electrode at a final charge voltage.

### ADVANTAGEOUS EFFECTS

A lithium secondary battery according to the present invention uses silicon as a negative electrode active material, and uses a positive electrode having a discharge behavior satisfying specific conditions, so that even when a relatively low cut-off voltage is applied, a negative electrode high-potential region (a region exceeding 0.6 V) in which the volume of silicon changes rapidly may be avoided. As a result, it is possible to effectively solve a problem of deterioration in lifespan properties of the battery caused by an excessive change in the volume of silicon, and discharging may proceed to a relatively low voltage, so that a high cell energy density may be implemented.

In addition, when lithium iron phosphate and a lithium nickel-based oxide having a theoretical efficiency close to 100% are used as a positive electrode active material of the lithium secondary battery according to the present invention, a discharge region of the lithium iron phosphate may be used when discharging the battery, if necessary, so that the loss in cell energy density may be minimized.

In addition, the lithium secondary battery according to the present invention may include 100 parts by weight of a lithium nickel-based oxide and 5 parts by weight to 20 parts by weight of lithium iron phosphate as a positive electrode active material. When the weight ratio of the lithium nickel-based oxide and the lithium iron phosphate satisfies the above range, a positive electrode having desired discharge properties may be provided, and since the lithium nickel-based oxide with a relatively high reaction potential is discharged earlier than the lithium iron phosphate, so that most of the lithium nickel-based oxide may be discharged near the cut-off voltage. As a result, the present invention may maximally utilize the capacity of the lithium nickel-based oxide, which is relatively expensive compared to the lithium iron phosphate, and thus has an advantage in terms of material costs.

### BRIEF DESCRIPTION OF THE DRAWINGS

FIG. 1 illustrates a graph and a table showing a negative electrode discharge potential value, cell energy density, and battery lifespan properties measured by changing a cut-off voltage in a lithium secondary battery in which a lithium nickel-based oxide is used as a positive electrode active material and silicon (pure Si 100%) is used as a negative electrode active material.
FIG. 2 is a discharge curve graph of a half-cell manufactured using each of a positive electrode and a negative electrode manufactured in Example 1.
FIG. 3 is a discharge curve graph of a half-cell manufactured using each of a positive electrode and a negative electrode manufactured in Example 2.
FIG. 4 is a discharge curve graph of a half-cell manufactured using each of a positive electrode and a negative electrode manufactured in Comparative Example 1.
FIG. 5 is a discharge curve graph of a half-cell manufactured using each of a positive electrode and a negative electrode manufactured in Comparative Example 2.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout the specification.

Unless otherwise defined, all the terms used herein (including technical and scientific terms) will be used in a sense that can be commonly understood to those of ordinary skill in the art to which the inventive concept pertains. In addition, the terms that are defined in a commonly used dictionary are not interpreted ideally or excessively unless specifically defined.

The terms used herein are for the purpose of describing embodiments and are not intended to be limiting of the present invention. In the present disclosure, singular forms include plural forms unless the context clearly indicates otherwise. As used herein, the terms "comprises" and/or "comprising" are intended to be inclusive of the stated elements, and do not exclude the possibility of the presence or the addition of one or more other elements.

In the present specification, when a part is said to include a certain component, it means that the part may further include another component rather than excluding another component unless otherwise stated.

In the present specification, the description of "A and/or B" means A, or B, or A and B.

In the present specification, "%" means wt% unless otherwise noted.

In the present specification, D₅₀ means a particle diameter corresponding to 50% of the volume accumulation in a particle diameter distribution curve of particles. The D₅₀ be measured by, for example, a laser diffraction method. The laser diffraction method generally enables measurement of a particle diameter from a sub-micron region to several millimeters, so that results of high reproducibility and high resolution may be obtained.

In the present specification, "specific surface area" is measured by a BET method, and specifically, may be calculated from the adsorption amount of nitrogen gas under a liquid nitrogen temperature (77K) using Belsorp-mino II of BEL Japan Co.

In the present specification, a cut-off voltage or a final discharge voltage (hereinafter, referred to as a "cut-off voltage") of a lithium secondary battery means a voltage of the lithium secondary battery at a point at which the discharge of the lithium secondary battery ends.

Hereinafter, the present invention will be described in more detail.

A lithium secondary battery according to the present invention includes a positive electrode including a positive electrode active material layer and a negative electrode including a negative electrode active material layer, wherein the negative electrode active material layer includes a negative electrode active material, and the negative electrode active material consists of silicon, and in a graph of capacity-voltage measured by manufacturing a half-cell including the positive electrode and a lithium metal electrode and then discharging the half-cell at a constant current of 0.1 C, an inflection point appears in a region in which a voltage is 3.3 V to 3.7 V, and the capacity of the positive electrode at the inflection point is 3% to 25% of the capacity of the positive electrode at a final charge voltage.

When silicon is used as the negative electrode active material, rapid volume expansion/contraction is accompanied, which is due to a change in crystal structure caused by lithium intercalation/deintercalation during battery charging and discharging, and accordingly, there is a problem in that electrical contacts between particles are broken, thereby degrading lifespan properties of the lithium secondary battery. Particularly, the volume expansion of the silicon is greatly affected by the potential of the negative electrode during charging and discharging.

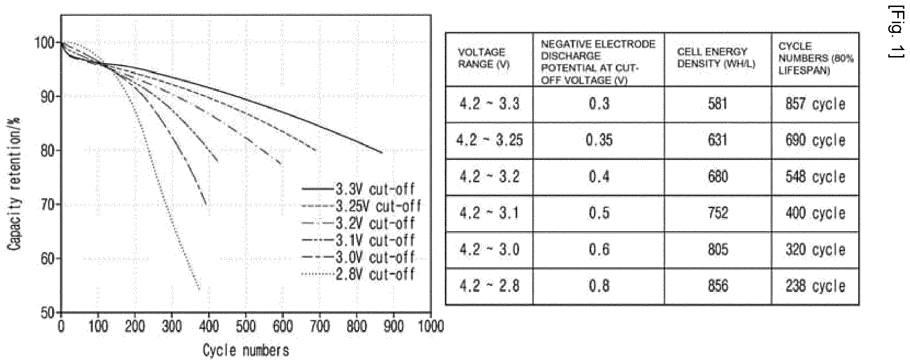

FIG. 1 illustrates a graph and a table showing a negative electrode discharge potential value, cell energy density, and battery lifespan properties measured by changing a cut-off voltage in a lithium secondary battery in which a lithium nickel-based oxide is used as a positive electrode active material and silicon (pure Si 100%) is used as a negative electrode active material. According to FIG. 1, in the case of the lithium secondary battery to which a silicon negative electrode is applied, even when the negative electrode discharge potential at a cut-off voltage slightly increases to a level of 0.05 V to 0.1 V, it can be confirmed that the lifespan properties of the battery are greatly reduced by about 100 cycles or more. This is because when the discharge potential of the negative electrode increases during the discharge process, silicon expansion occurs rapidly. In addition, according to FIG. 1, it can be confirmed that when the cut-off voltage of the lithium secondary battery to which the silicon negative electrode is applied increases, the negative electrode discharge potential decreases, thereby improving the lifespan properties of the battery, but the cell energy density is rapidly reduced. As described above, in the lithium secondary battery to which the silicon negative electrode active material is applied, the cell energy density and the lifespan properties are in a trade-off relationship, so that it has not been easy to implement excellent cell energy density and excellent lifespan properties.

In order to solve the above problems, the present inventors have repeatedly conducted research, and as a result, have found that when a positive electrode having a specific discharge behavior is applied as a positive electrode of a lithium secondary battery to which a silicon negative electrode active material is applied, it is possible to avoid using a negative electrode high potential region in which the rapid expansion of silicon occurs even when a relatively low cut-off voltage is applied, thereby minimizing degradation in cell energy density and implementing excellent lifespan properties, and have completed the present invention.

Specifically, the lithium secondary battery of the present invention includes a positive electrode including a positive electrode active material layer and a negative electrode including a negative electrode active material layer, wherein the negative electrode active material layer includes a negative electrode active material, and the negative electrode active material consists of silicon, and in a graph of capacity-voltage measured by manufacturing a half-cell including the positive electrode and a lithium metal electrode and then discharging the half-cell at a constant current of 0.1 C, an inflection point appears in a region in which a voltage is 3.3 V to 3.7 V, and the capacity of the positive electrode at the inflection point is 3% to 25% of the capacity of the positive electrode at a final charge voltage.

More specifically, the lithium secondary battery according to the present invention includes a negative electrode in which a negative electrode active material consists of silicon, a positive electrode having the above-described discharge behavior, a separator interposed between the positive electrode and the negative electrode, and an electrolyte.

Hereinafter, each component of the lithium secondary battery of the present invention will be described in more detail.

### <Negative electrode>

The negative electrode according to an embodiment of the present invention may include a negative electrode active material layer. Specifically, the negative electrode according to the present invention may include a negative electrode current collector, and the negative electrode active material layer positioned on at least one surface of the negative electrode current collector.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used.

The negative electrode current collector may typically have a thickness of 3 µm to 500 µm, and as in the case of the positive electrode current collector, microscopic irregularities may be formed on the surface of the negative electrode current collector to improve the adhesion of a negative electrode active material. For example, the negative electrode current collector may be used in various forms such as a film, a sheet, a foil, a net, a porous body, a foam, a non-woven body, and the like.

The negative electrode active material layer is positioned on at least one surface of the negative electrode current collector, and may include a negative electrode active material. Additionally, the negative electrode active material layer may further include a negative electrode conductive material and a negative electrode binder in addition to the negative electrode active material, if necessary.

Hereinafter, each component included in the negative electrode active material layer will be described in detail.

The negative electrode active material is for causing an electrochemical reaction by being coupled to lithium ions moving from the positive electrode during battery charging.

The negative electrode active material according to the present invention may be made of silicon (Si). Since the silicon has an excellent capacity compared to other silicon-based particles such as SiOx, Si-C, or the like, when silicon is used alone as a negative electrode active material, a lithium secondary battery having a high energy density may be implemented.

However, as described above, when silicon particles are used as a negative electrode active material, a rapid change in volume of a negative electrode occurs during charging and discharging in a high-potential region in which a negative electrode potential exceeds 0.6 V, so that there is a problem in that the lifespan properties of a battery is deteriorated. In order to suppress silicon expansion, a cut-off voltage may be increased so that the high-potential region of a negative electrode is not used, but in this case, since the capacity of a positive electrode is not completely used, there is a problem in that the cell energy density is reduced.

In order to solve such a problem, in the lithium secondary battery according to the present invention, a positive electrode having a specific discharge behavior is applied, which is to be described later, so that even when a relatively low cut-off voltage is applied, a negative electrode high-potential region (a region exceeding 0.6 V) in which the volume of silicon changes rapidly may be avoided, thereby minimizing the change in silicon volume, and increasing the use capacity of the positive electrode during discharging to minimize the degradation in cell energy density.

The average particle diameter D₅₀ of silicon may be 5 µm to 20 µm, specifically 5 µm to 18 µm, and more preferably 5 µm to 15 µm. When the average particle diameter D₅₀ of the silicon satisfies the above numerical range, it is advantageous in terms of securing the capacity retention rate of the battery since it is easy to control the volume expansion during charging and discharging.

In addition, when the average particle diameter of the silicon particles is too small, the specific surface area of the particles increases excessively, causing the viscosity of a negative electrode slurry to rise excessively. Accordingly, the dispersion of particles constituting the negative electrode slurry is not facilitated. In addition, when the size of a silicon-based active material is too small, the contact area between silicon particles and conductive materials is reduced by a composite composed of a conductive material and a binder in a negative electrode slurry, thereby increasing the possibility of a conductive network being disconnected, so that the capacity retention rate is lowered.

Meanwhile, when the average particle diameter of the silicon particles is too large, the surface of the negative electrode becomes not smooth, and accordingly, the current density is not uniform during charging and discharging. In addition, when the silicon particles are too large, the phase stability of the negative electrode slurry becomes unstable, so that the processability is degraded. Accordingly, the capacity retention rate of the battery is degraded.

The BET specific surface area of silicon may be 0.1 m²/g to 5 m²/g, specifically 0.2 m²/g to 4 m²/g, and more specifically 0.3 m²/g to 3.5 m²/g , and when the BET specific surface area of the silicon satisfies the above numerical range, side reactions with the electrolyte may be prevented, so that it is possible to improve the initial efficiency and lifespan properties of the battery.

The silicon may be present in a crystalline or amorphous form, and preferably not porous. The pure silicon particles may be spherical or fragmented particles, but are not limited thereto, and may have a fiber structure, or may be present in the form of a silicon-containing film or coating.

The silicon may be included in the negative electrode active material layer in an amount of 60 wt% to 99 wt%, specifically 65 wt% to 98 wt%, and more specifically 70 wt% to 95 wt%. When the content of the negative electrode active material satisfies the above range, a sufficient negative electrode energy density is secured while maintaining the content of the negative electrode conductive material and the negative electrode binder at a desirable level, so that the battery capacity of the negative electrode may be improved.

The negative electrode conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fiber, and a carbon nanotube; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used.

The negative electrode conductive material may be included in the negative electrode active material layer in an amount of 1 wt% to 15 wt%, specifically 2 wt% to 13 wt%, and more specifically 5 wt% to 12 wt%. When the content of the negative electrode active material satisfies the above range, the electrical conductivity of the negative electrode may be improved by securing a negative electrode conductive network.

The negative electrode binder serves to improve the bonding between negative electrode active material particles and the adhesion between the negative electrode active material and the negative electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-- butadiene rubber (SBR), fluorine rubber, or various copolymers thereof, and any one thereof or a mixture of two or more thereof may be used.

The negative electrode binder may be included in the negative electrode active material layer in an amount of 1 wt% to 15 wt%, specifically 2 wt% to 13 wt%, and more specifically 5 wt% to 12 wt%. When the content of the negative electrode active material satisfies the above range, the negative electrode active material particles are smoothly bonded to minimize the problem of volume expansion of the negative electrode active material, and the negative electrode active material may be well attached to the negative electrode current collector.

A negative electrode discharge potential value at a cut-off voltage of the lithium secondary battery according to the present invention may be 0.6 V or lower, specifically 0.1 V to 0.5 V, and more specifically 0.1 V to 0.4 V. At this time, the negative electrode discharge potential is a negative electrode discharge potential in the first charging and discharging cycle of the lithium secondary battery. When the value of the negative electrode discharge potential at the cut-off voltage satisfies the above range, the lifespan properties of the battery may be improved by not passing through a high-potential region in which the volume of silicon changes rapidly during charging and discharging. At this time, the negative electrode discharge potential value or the negative electrode discharge curve graph may be measured by manufacturing a half-cell using the negative electrode applied to the lithium secondary battery of the present invention and a lithium metal electrode, and then discharging the half-cell at a constant current.

### <Positive electrode>

In a graph of capacity-voltage measured by manufacturing a half-cell including the positive electrode and a lithium metal electrode and then discharging the half-cell at a constant current of 0.1 C, the positive electrode of the lithium secondary battery according to the present invention has an inflection point appearing in a region in which a voltage is 3.3 V to 3.7 V, specifically 3.3 V to 3.6 V, and more specifically 3.3 V to 3.5 V, and has a discharge behavior in which the capacity of the positive electrode at the inflection point appears at a level of 3% to 25%, specifically 4% to 23%, and more specifically 4% to 20% of the capacity of the positive electrode at a final charge voltage.

Here, the inflection point means that the secondary derivative of a potential value with respect to a capacitance value is 0 in a discharge curve graph of the half-cell, and the presence of such an inflection point indicates that the voltage value changes rapidly in the corresponding voltage region. Since the voltage of the positive electrode of the present invention rapidly decreases in a region of 3.3 V to 3.7 V during discharging, it is possible to avoid using a high-potential region in which silicon expansion is caused even at a relatively low cut-off voltage, and accordingly, the use capacity range of the positive electrode increases, so that the degradation in cell energy density may be minimized.

Meanwhile, when the capacity of the positive electrode at the inflection point is greater than 25% of the capacity of the positive electrode at the final charge voltage, there is a problem in that when the lithium secondary battery is discharged to the inflection point, an unused capacity of the positive electrode increases, so that the cell energy density of the lithium secondary battery is lowered. In addition, when the capacity of the positive electrode at the inflection point is less than 3% of the capacity of the positive electrode at the final charge voltage, there is a problem in that when the lithium secondary battery is discharged to the inflection point, a negative electrode high-potential region (a region exceeding 0.6 V) in which the volume of silicon changes rapidly is used, thereby degrading the lifespan properties of the battery.

Meanwhile, the positive electrode may include a positive electrode active material layer. Specifically, the positive electrode according to the present invention may include a positive electrode current collector, and the positive electrode active material layer positioned on at least one surface of the positive electrode current collector.

The positive electrode current collector is not particularly limited as long as it has conductivity without causing a chemical change in the battery. For example, as the current collector, stainless steel, aluminum, nickel, titanium, fired carbon, or aluminum or stainless steel that is surface-treated with one of carbon, nickel, titanium, silver, and the like may be used.

The positive electrode current collector may have a thickness of 3 µm to 500 µm, and microscopic irregularities may be formed on the surface of the positive electrode current collector to improve adhesion with respect to the positive electrode active material layer. For example, the positive electrode current collector may be used in various forms such as a film, a sheet, a foil, a net, a porous body, a foam, a non-woven body, and the like.

The positive electrode active material layer is positioned on at least one surface of the positive electrode current collector, and may include a positive electrode active material. Additionally, the positive electrode active material layer may further include a conductive material, a binder, and a dispersant in addition to the positive electrode active material, if necessary.

Hereinafter, each component included in the positive electrode active material layer will be described in detail.

The positive electrode active material layer according to the present invention may include two types of positive electrode active materials having different reaction potentials. For example, the positive electrode active material layer may include lithium iron phosphate and a lithium nickel-based oxide as the positive electrode active material.

The lithium nickel-based oxide may be a compound represented by Formula 1 below.

[Formula 1] Liₓ[Ni_{y}Co_{z}M¹_{w}M²ᵥ]O₂₋ₚAₚ

In Formula 1 above, M¹ may be Mn, Al, or a combination thereof, M² may be one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and A may be one or more elements selected from the group consisting of F, Cl, Br, I, At, and S.

In addition, in Formula 1 above, it may be that 1.0≤x≤1.30, 0.3≤y<1, 0≤z≤0.6, 0≤w≤0.6, 0≤v≤0.2, and 0≤p≤0.2, specifically 1.0≤x≤1.20, 0.3≤y<0.95, 0<z≤0.5, 0<w≤0.5, 0≤v≤0.05, and 0≤p≤0.05. For example, the lithium nickel-based oxide may be Li[Ni_{0.6}Co_{0.2}Mn_{0.2}]O₂, Li[Ni_{0.8}Co_{0.1}Mn_{0.1}]O₂, Li[Ni_{0.5}Co_{0.2}Mn_{0.3}]O₂, or the like, but is not limited thereto.

The lithium nickel-based oxide may be included in the negative electrode active material layer in an amount of 82 wt% to 94 wt%, specifically 82 wt% to 92 wt%, and more specifically 82 wt% to 89 wt%. When the content of the lithium nickel-based oxide in the positive electrode active material layer satisfies the above range, a sufficient positive electrode energy density is secured, so that the battery capacity of the positive electrode may be secured.

The average particle diameter D₅₀ of lithium nickel-based oxide may be 4 µm to 20 µm, specifically 5 µm to 20 µm, and more preferably 5 µm to 15 µm. When the average particle diameter D₅₀ of the lithium nickel-based oxide satisfies the above range, a high compression density is implemented when the lithium nickel-based oxide is mixed with lithium iron phosphate to be described later, so that an effect of improving the cell energy density may be obtained.

The BET specific surface area of the lithium nickel-based oxide may be 0.1 m²/g to 2.0 m²/g, specifically 0.3 m²/g to 1.5 m²/g, and more specifically 0.5 m²/g to 1.5 m²/g. When the BET specific surface area of the lithium nickel-based oxide satisfies the above range, side reactions with an electrolyte solution are reduced, so that the problem of deterioration in battery life performance may be minimized.

Meanwhile, the lithium iron phosphate may be a compound represented by Formula 2 below.

[Formula 2] Li₁₊ₐFe_{1-b}M_{b}(PO_{4-c})X_{c}

In Formula 2 above, M may include one or more elements selected from the group consisting of Al, Mg, Ni, Co, Mn, Ti, Ga, Cu, V, Nb, Zr, Ce, In, Zn, and Y, and X may include any one or two or more elements selected from the group consisting of F, S, and N. In Formula 2 above, a, b, and c may respectively be -0.5≤a≤0.5, 0≤b≤0.5, and 0≤c≤0.1, specifically -0.3≤a≤0.3, 0≤b≤0.3, and 0≤c≤0.05. For example, the lithium iron phosphate may be LiFePO₄ having an olivine crystal structure.

The lithium iron phosphate may be included in the positive electrode active material layer in an amount of 4 wt% to 16 wt%, specifically 6 wt% to 16 wt%, and more specifically 9 wt% to 16 wt%.

Preferably, the lithium iron phosphate may be included in a content of 5 parts by weight to 20 parts by weight, specifically 7 parts by weight to 20 parts by weight, and more specifically 10 parts by weight to 20 parts by weight based on 100 parts by weight of the lithium nickel-based oxide.

When the weight ratio of the lithium iron phosphate and the lithium nickel-based oxide satisfies the above range, a positive electrode having the above-described discharge behavior may be manufactured. In addition, when the content of the lithium iron phosphate is too small, the negative electrode potential at the cut-off voltage increases, thereby reducing the effect of improving lifespan properties, and when the cut-off voltage is increased in order to improve the lifespan properties, the use capacity of the positive electrode decreases, so that the cell energy density is reduced. Meanwhile, when the content of the lithium iron phosphate is too large, due to an increase in the amount of the positive electrode active material, the cell volume increases, so that the cell energy density is degraded.

The average particle diameter D₅₀ of the lithium iron phosphate may be 3 µm to 10 µm, specifically 3 µm to 9 µm, and more specifically 4 µm to 9 µm. When the average particle diameter D₅₀ of the lithium iron phosphate satisfies the above range, particle aggregation between the lithium iron phosphate is prevented, and also, since the average particle diameter of the lithium iron phosphate and the average particle diameter of the lithium nickel-based oxide are similar to each other, the lithium iron phosphate and the lithium nickel-based oxide may be uniformly mixed. As a result, a positive electrode in which a positive electrode active material is uniformly distributed may be formed.

The ratio of the average particle diameter D₅₀ of the lithium iron phosphate to the average particle diameter D₅₀ of the lithium nickel-based oxide may be 0.5 to 1.5, specifically 0.5 to 1.2, and more specifically 0.5 to 1.0. When the ratio of the average particle diameter D₅₀ of the lithium iron phosphate to the average particle diameter D₅₀ of the lithium nickel-based oxide satisfies the above range, the average particle diameter of the lithium iron phosphate and the average particle diameter of the lithium nickel-based oxide are similar to each other, so that the lithium iron phosphate and lithium nickel-based oxide may be uniformly mixed, which makes it possible to prevent the energy density of the positive electrode from being locally non-uniform.

The BET specific surface area of the lithium iron phosphate may be 5 m²/g to 20 m²/g, specifically 7 m²/g to 18 m²/g, and more specifically 8 m²/g to 16 m²/g. When the BET specific surface area of the lithium iron phosphate satisfies the above range, even when the content of a positive electrode dispersant is relatively low, the aggregation of the lithium iron phosphate may be effectively suppressed.

Meanwhile, when a combination of the lithium nickel-based oxide and the lithium iron phosphate combination is used as a positive electrode active material, the lithium nickel-based oxide is discharged earlier than the lithium iron phosphate during discharging, so that most of the lithium nickel-based oxide may be discharged near the cut-off voltage. As a result, the present invention may maximally utilize the capacity of the lithium nickel-based oxide, which is relatively expensive compared to the lithium iron phosphate, and thus is advantageous in terms of material costs.

In addition, the lithium secondary battery according to the present invention includes lithium iron phosphate, which is a positive electrode active material having a theoretical efficiency close to 100%, and thus may utilize a discharge region of the lithium iron phosphate during battery discharging, if necessary. Therefore, the loss in energy density caused by the addition of the lithium iron phosphate to the lithium nickel-based oxide may be minimized.

The positive electrode active material may be included in the positive electrode active material layer in an amount of 85 wt% to 99 wt%, specifically 90 wt% to 99 wt%, and more specifically 93 wt% to 99 wt%. When the content of the positive electrode active material satisfies the above range, a sufficient positive electrode energy density is secured, so that the battery capacity of the positive electrode may be improved.

A positive electrode conductive material is not particularly limited as long as it has conductivity without causing a chemical change in the battery, and for example, graphite; carbon black such as carbon black, acetylene black, Ketjen black, channel black, furnace black, lamp black, and thermal black; a conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; a conductive material such as a polyphenylene derivative, or the like may be used. Specific examples of a commercially available positive electrode conductive material may include acetylene black series of Chevron Chemical Company, Denka Black of Denka Singapore Private Limited, products of Gulf Oil Company, etc., Ketjen black, EC series of Armak Company, Vulcan XC-72 of Cabot Company, and Super P of Timcal Company. Preferably, the positive electrode conductive material may be carbon nanotube.

The positive electrode conductive material may be included in the positive electrode active material layer in an amount of 0.1 wt% to 5.0 wt%, specifically 0.1 wt% to 3.0 wt%, and more specifically 0.3 wt% to 2.0 wt%. When the content of the positive electrode conductive material in the positive electrode active material layer satisfies the above range, the electrical conductivity of the positive electrode may be improved by securing a positive electrode conductive network.

A positive electrode binder serves to assist in coupling between a positive electrode active material, a conductive material, and the like, and coupling to a current collector. Specific examples thereof may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber, fluorine rubber, or various copolymers thereof, and any one thereof or a mixture of two or more thereof may be used.

The positive electrode binder may be included in the positive electrode active material layer in an amount of 0.5 wt% to 5.0 wt%, specifically 1.0 wt% to 4.0 wt%, and more specifically 1.0 wt% to 3.5 wt%. When the content of the positive electrode binder satisfies the above range, a contact area between the positive electrode binder and the positive electrode active material increases, so that excellent positive electrode adhesion may be secured.

A positive electrode dispersant suppresses a phenomenon in which lithium iron phosphate is excessively aggregated in a positive electrode slurry composition, and enables the lithium iron phosphate to be effectively dispersed and present in a prepared positive electrode active material layer.

A positive electrode dispersant may include a hydrogenated nitrile-based copolymer, and specifically, the positive electrode dispersant may be a hydrogenated nitrile-based copolymer.

Specifically, the hydrogenated nitrile-based copolymer may be a copolymer including an α,β-unsaturated nitrile-derived structural unit and a hydrogenated conjugated diene-derived structural unit, or may be a copolymer including an α,β-unsaturated nitrile-derived structural unit, a conjugated diene-derived structural unit, and hydrogenated conjugated diene-derived structural unit. As the α,β-unsaturated nitrile monomer, for example, acrylonitrile or methacrylonitrile may be used, and any one thereof or a mixture of two or more thereof may be used. As the conjugated diene-based monomer, for example, conjugated diene-based monomers having 4 to 6 carbon atoms such as 1,3-butadiene, isoprene, 2,3-methyl butadiene, or the like may be used, and any one thereof or a mixture of two or more thereof may be used.

More specifically, the hydrogenated nitrile-based copolymer may be a hydrogenated nitrile-based butadiene rubber (H-NBR).

The positive electrode dispersant may be included in the positive electrode active material layer in an amount of 1.5 wt% or less, specifically 0.1 wt% to 1.0 wt%, and more specifically 0.2 wt% to 0.8 wt%. When the content of the positive electrode dispersant satisfies the above range, aggregation of the positive electrode conductive material in the positive electrode active material layer is suppressed, so that a positive electrode conductive network may be improved.

Meanwhile, the positive electrode may be manufactured according to a typical method for manufacturing a positive electrode, except that the above-described positive electrode active material is used. Specifically, the positive electrode may be manufactured by preparing a positive electrode slurry composition including the above-described positive electrode active material, a positive electrode conductive material, a positive electrode binder, and/or a positive electrode dispersant, and then applying the positive electrode slurry composition on a positive electrode current collector, followed by drying and rollpressing the composition.

Alternatively, in another method, the positive electrode may also be manufactured by casting the positive electrode slurry composition on a separate support, and then laminating a film obtained by being peeled off from the support on a positive electrode current collector.

### <Separator>

The lithium secondary battery according to the present invention may include a separator between the negative electrode and the positive electrode.

The separator may be used without particular limitation as long as it is commonly used as a separator in a lithium secondary battery, and particularly, a separator having excellent moisture-retention capability for an electrolyte solution while having low resistance to ion movement in an electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structural body having two or more layers thereof may be used. In addition, a typical porous non-woven fabric, for example, a non-woven fabric formed of glass fiber having a high melting point, polyethylene terephthalate fiber, or the like may be used. In addition, the separator may be a porous thin film having a pore diameter of 0.01 µm to 10 µm and a thickness of 5 µm to 300 µm.

### <Electrolyte>

The lithium secondary battery according to an embodiment of the present invention may include a non-aqueous electrolyte.

The non-aqueous electrolyte may include an organic solvent and a lithium salt commonly used in the art, but is not particularly limited.

Any organic solvent may be used as the organic solvent without particular limitation as long as it may serve as a medium through which ions involved in an electrochemical reaction of the battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC), and the like may be used.

Among the above, a carbonate-based solvent is preferable, and a mixture of a cyclic carbonate (e.g., ethylene carbonate or propylene carbonate) having a high ionic conductivity and a high dielectric constant, which may increase charging/discharging performance of the battery, and a low-viscosity linear carbonate-based compound (e.g., ethylmethyl carbonate, dimethyl carbonate, or diethyl carbonate) is more preferable.

Any compound may be used as the lithium salt without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, Lil, LiB(C₂O₄)₂, or the like may be used. It is preferable that the lithium salt is included in the electrolyte in a concentration of about 0.6 mol% to about 2 mol%.

Meanwhile, the non-aqueous electrolyte according to the present invention may additionally include, although not required, additives in order to further improve the physical properties of the secondary battery.

Examples of such an additive may include at least one selected from the group consisting of a cyclic carbonate-based compound, a halogen-substituted carbonate-based compound, a nitrile-based compound, a sultone-based compound, a sulfate-based compound, a phosphate-based compounds, a borate-based compound, a benzene-based compound, an amine-based compound, a silane-based compound, and a lithium salt-based compound.

The cyclic carbonate-based compound may be, for example, vinylene carbonate (VC), vinylethylene carbonate (VEC), or the like.

The halogen-substituted carbonate-based compound may be, for example, fluoroethylene carbonate (FEC) and the like.

The nitrile-based compound may be, for example, succinonitrile, adiponitrile, hexanetricyanide, 1,4-dicyano-2-butene, and the like.

The sultone-based compound may be, for example, 1,3-propanesultone, 1,3-propenesultone, or the like.

The sulfate-based compound may be, for example, ethylene sulfate (ESA), trimethylene sulfate (TMS), methyl trimethylene sulfate (MTMS), or the like.

The phosphate-based compound may be, for example, one or more compounds selected from the group consisting of lithium difluoro(bisoxalato)phosphate, lithium difluorophosphate, tetramethyl trimethyl silyl phosphate, trimethyl silyl phosphite, tris(2,2,2-trifluoroethyl)phosphate, and tris(trifluoroethyl)phosphite.

The borate-based compound may be, for example, tetraphenylborate, lithium oxalyldifluoroborate (LiODFB), or the like.

The benzene-based compound may be, for example, fluorobenzene or the like, the amine-based compound may be triethanolamine, ethylenediamine, or the like, and the silane-based compound may be tetravinylsilane or the like.

The lithium salt-based compound is a compound different from the lithium salt included in the non-aqueous electrolyte solution, and may be one or more compounds selected from the group consisting of LiPO₂F₂, LiODFB, lithium bisoxalatoborate (LiB(C₂O₄)₂) (LiBOB), and LiBF₄.

Meanwhile, the additives may be used alone, or two or more thereof may be mixed and used.

The total amount of the additive may be 1 wt% to 20 wt%, preferably 1 wt% to 15 wt% based on the total weight of the electrolyte solution. When the additive is included in the above range, it is possible to stably form a film on the electrode, suppress an ignition phenomenon during overcharging, and prevent side reactions from occurring or the additive from remaining or being precipitated during an initial activation process of the secondary battery.

The lithium secondary battery of the present invention may be manufactured by disposing a separator between a positive electrode and a negative electrode to form an electrode assembly, putting the electrode assembly into a cylindrical battery case or a prismatic battery case, and then injecting an electrolyte into the case. Alternatively, the lithium secondary battery may be manufactured by stacking the electrode assembly, putting a resultant product obtained by impregnating the electrode assembly with an electrolyte into a battery case, followed by sealing the battery case.

Any battery case commonly used in the art may be adopted as the battery case, and there is no limitation in the appearance thereof according to the use of a battery, and for example, the appearance may be a cylindrical shape, a square shape, a pouch shape, a coin shape, or the like.

Preferably, the cell energy density of the lithium secondary battery according to the present invention may be 650 Wh/L or greater, specifically 650 Wh/L to 800 Wh/L, and more specifically 670 Wh/L to 800 Wh/L. When the cell energy density of the lithium secondary battery satisfies the above range, a high-capacity battery may be easily implemented.

The lithium secondary battery according to an embodiment of the present invention may be used in a battery cell which is used as a power source for a small-sized device, and may also be preferably used as a unit cell in a medium-and-large-sized battery module including a plurality of battery cells. Preferable examples of the above medium-and large-sized device may include electric vehicles, hybrid electric vehicles, plug-in hybrid electric vehicles, electric power storage systems (ESSs), and the like, and particularly, the lithium secondary battery may be usefully used in hybrid electric vehicles (HEVs), batteries for renewable energy storage, and the like, which are areas in which high power is required.

Hereinafter, the present invention will be described in more detail with reference to examples. However, the following examples are merely illustrative of the present invention, and the scope of the present invention is not limited thereby.

### Examples and Comparative Examples

### Example 1

### (1) Manufacturing of negative electrode

Silicon particles (average particle diameter D₅₀ = 10 µm, BET specific surface area = 3 m²/g), carbon black, carboxymethyl cellulose (CMC), and styrene-butadiene rubber (SBR) were mixed at a weight ratio of 80 : 10 : 1 : 9, and distilled water was added thereto to prepare a negative electrode slurry. The solid content of the negative electrode slurry was 50 wt%.

The negative electrode slurry was applied on one surface of a copper (Cu) metal thin film having a thickness of 20 µm at a loading amount of 8.5 mAh/cm² and then vacuum-dried. Thereafter, the dried negative electrode slurry was roll-pressed, dried in a vacuum oven at 130 °C for 12 hours, and then punched to manufacture a negative electrode.

### (2) Manufacturing of positive electrode

100 parts by weight of Li[Ni_{0.6}Co_{0.2}Mn_{0.2}]O₂ having an average particle diameter D₅₀ of 10 µm, and 15 parts by weight of LiFePO₄ having an average particle diameter D₅₀ of 7 µm were mixed to prepare a positive electrode active material.

The prepared positive electrode active material, a carbon nanotube (CNT) conductive material, a polyvinylidene fluoride (PVdF) binder, and a hydrogenated nitrile-based butadiene rubber (H-NBR) dispersant were added to a N-methylpyrrolidone (NMP) solvent at a weight ratio of 97.0 : 1.0 : 1.5 : 0.5 and stirred to prepare a positive electrode slurry. The solid content of the positive electrode slurry was 70 wt%.

The positive electrode slurry was applied on one surface of an aluminum thin film having a thickness of 20 µm at a loading amount of 4.5 mAh/cm², and then vacuum-dried at 130 °C for 10 hours. The dried positive electrode slurry was roll-pressed, dried in a vacuum oven at 130 °C for 12 hours, and then punched to manufacture a positive electrode.

### (3) Manufacturing of lithium secondary battery

The negative electrode and the positive electrode manufactured as described above and a porous polyethylene separator were assembled in a stacking manner to manufacture an electrode assembly, and the electrode assembly was accommodated in a battery case, and then an electrolyte solution (ethylene carbonate (EC)/ethylmethyl carbonate(EMC) = 1/2 (volume ratio), lithium hexafluorophosphate (LiPF₆) 1 M) was injected thereto to manufacture a lithium secondary battery.

### Example 2

A lithium secondary battery was manufactured in the same manner as in Example 1, except that LiFePO₄ was mixed in 5 parts by weight when preparing a positive electrode active material.

### Comparative Example 1

A lithium secondary battery was manufactured in the same manner as in Example 1, except that LiFePO₄ was not used when preparing a positive electrode active material.

### Comparative Example 2

A lithium secondary battery was manufactured in the same manner as in Example 1, except that LiFePO₄ was mixed in 30 parts by weight when preparing a positive electrode active material.

**[Table 1]**

| | Negative electrode active material | Positive electrode active material |
|---|---|---|
| Example 1 | Si | NCM 100 parts by weight + LFP 15 parts by weight |
| Example 2 | Si | NCM 100 parts by weight + LFP 5 parts by weight |
| Comparati ve Example 1 | Si | NCM 100 parts by weight |
| Comparati ve Example 2 | Si | NCM 100 parts by weight + LFP 30 parts by weight |

### Experimental Example 1 - Evaluation of discharge behavior

### 1) Evaluation of negative electrode discharge behavior

The negative electrode prepared in each of Examples 1 and 2 and Comparative Examples 1 and 2, and a lithium (Li) metal electrode cut into a circular shape were used, and a porous polyethylene separator was interposed between the lithium metal electrode and the negative electrode to manufacture an electrode assembly, and then after the electrode assembly was accommodated in a battery case, an electrolyte solution (ethylene carbonate (EC)/ethylmethyl carbonate(EMC) = 1/2 (volume ratio), lithium hexafluorophosphate (LiPF₆) 1 M) was injected thereto to manufacture a negative electrode-half cell.

The negative electrode-half cell manufactured as described above was charged to 0.005 V with a constant current CC of 0.1 C, and then discharged to 1.0 V with a constant current CC of 0.1 C to measure a change in capacity-voltage so as to obtain a discharge curve graph of the negative electrode.

### 2) Evaluation of positive electrode discharge behavior

A positive electrode-half cell was manufactured in the same manner as the method for manufacturing a half cell for measuring the discharge curve of the negative electrode, except that the positive electrode prepared in each of Examples 1 and 2 and Comparative Examples 1 and 2, and a lithium (Li) metal electrode cut into a circular shape were used.

The positive electrode-half cell manufactured as described above was charged to 4.3 V with a constant current CC of 0.1 C, and then discharged to 2.5 V with a constant current CC of 0.1 C to measure a change in capacity-voltage so as to obtain a discharge curve graph of the positive electrode.

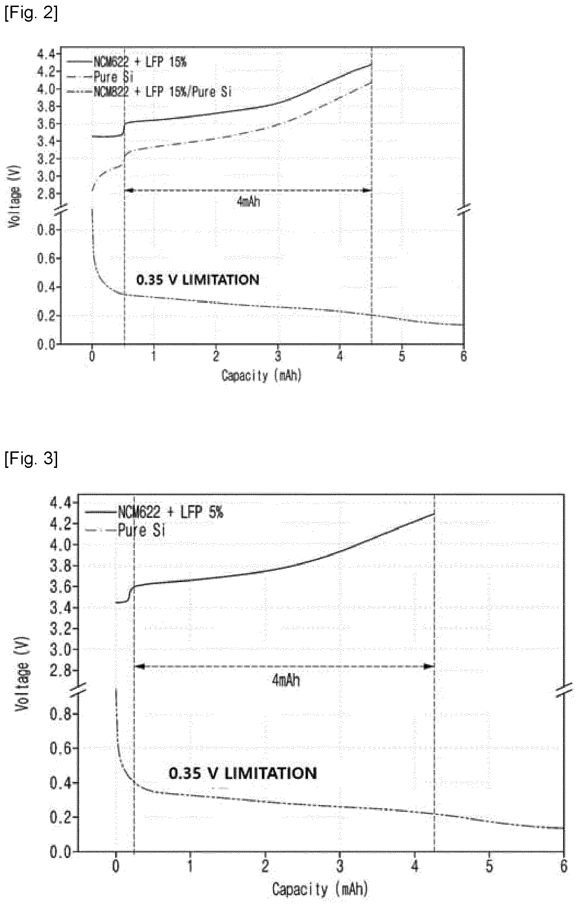

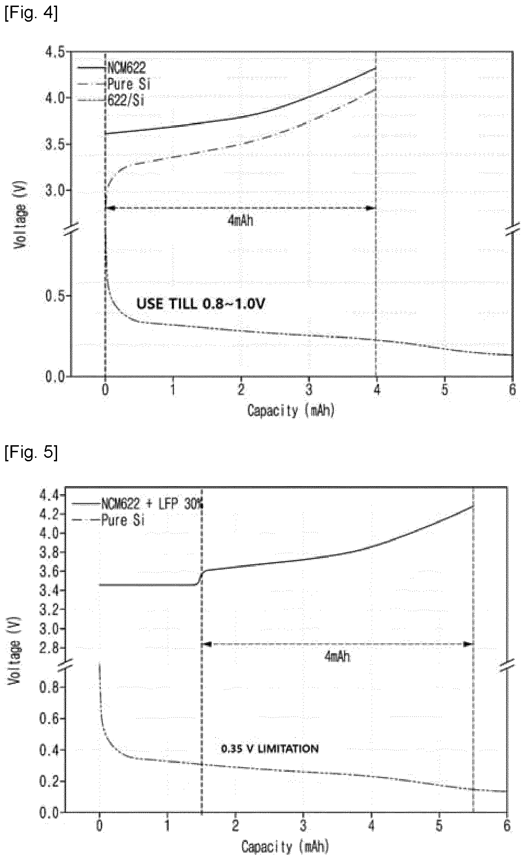

Discharge curve graphs of the positive electrode-half cells and the negative electrode-half cells measured as described above are shown in FIG. 2 to FIG. 5. Specifically, FIG. 2 is a discharge curve graph of the half-cell manufactured using each of the positive electrode and the negative electrode manufactured in Example 1, FIG. 3 is a discharge curve graph of the half-cell manufactured using each of the positive electrode and the negative electrode manufactured in Example 2, FIG. 4 is a discharge curve graph of the half-cell manufactured using each of the positive electrode and the negative electrode manufactured in Comparative Example 1, and FIG. 5 is a discharge curve graph of the half-cell manufactured using each of the positive electrode and the negative electrode manufactured in Comparative Example 2.

As illustrated in FIGS. 2, 3, and 5, an inflection point appeared in a voltage range of 3.3 to 3.7 V on the positive electrode discharge curve graph of Examples 1 and 2 and Comparative Example 2 in which lithium iron phosphate and a lithium nickel-based oxide having different reaction potentials were used as a positive electrode active material.

On the other hand, as illustrated in FIG. 4, an inflection point did not appear on the discharge curve graph of the positive electrode of Comparative Example 1 in which a lithium nickel-based oxide was used alone as a positive electrode active material.

In addition, referring to FIG. 2 and FIG. 3, it can be confirmed that in the case of the positive electrode of Example 1, the positive electrode capacity (0.5 mAh) at the inflection point is about 11% of the positive electrode capacity (4.5 mAh) at the final charge voltage, and in the case of the positive electrode of Example 2, the positive electrode capacity (0.2 mAh) at the inflection point is about 4.7% of the positive electrode capacity (4.25 mAh) at the final charge voltage.

In comparison, according to FIG. 5, it can be confirmed that in the positive electrode of Comparative Example 2, the positive electrode capacity (1.5 mAh) at the inflection point is about 27% of the positive electrode capacity (5.5 mAh) at the final charge voltage.

Meanwhile, through FIGS. 2 to 5, it can be seen that when a cut-off voltage is set to implement the same positive electrode discharge capacity, the batteries of Examples 1 and 2 do not use the high-potential region of the negative electrode, but the battery of Comparative Example 1 uses the high-potential region of the negative electrode. Specifically, in the case of Examples 1 and 2, the negative electrode potential is 0.4 V or less at a cut-off voltage that was set such that the discharge capacity of the positive electrode is 4 mAh, whereas in the case of Comparative Example 1, the negative electrode potential is as high as 0.8 V or greater at the cut-off voltage. When the negative electrode potential at a cut-off voltage is high as in Comparative Example 1, the negative electrode potential increases during a discharging process, thereby causing rapid expansion of silicon, and accordingly, lifespan properties are significantly degraded. Meanwhile, in the case of Comparative Example 2, as illustrated in FIG. 5, the negative electrode potential at the cut-off voltage is as low as 0.4 V or less, so that silicon expansion may be suppressed, but the cut-off voltage (positive electrode potential-negative electrode potential) is very high at a level of 3.3 V, so that it is expected that the cell energy density will be significantly reduced.

### Experimental Example 2 - Evaluation of energy density of lithium secondary battery

Each of the lithium secondary batteries manufactured in Examples 1 and 2 and Comparative Example 2 were fully charged, and then discharged to a set cut-off voltage to measure the cell energy density. At this time, the cut-off voltage was set to a potential difference between the positive electrode and the negative electrode at the inflection point on the positive electrode discharge curve graph of each of the batteries, and the cell energy density was calculated by dividing the energy (voltage (V) × capacity (Ah)) generated until the end of discharging of the lithium secondary battery by the volume (L) value of the lithium secondary battery.

**[Table 2]**

| | Cell energy density (Wh/L) |
|---|---|
| Example 1 | 698.2 |
| Example 2 | 743.4 |
| Comparative Example 2 | 638.2 |

Through Table 2 above, it can be confirmed that the cell energy density of the lithium secondary battery manufactured by each of Examples 1 and 2 is significantly superior to that of the lithium secondary battery manufactured by Comparative Example 2.

## Claims

1. A lithium secondary battery comprising:
a positive electrode including a positive electrode active material layer; and a negative electrode including a negative electrode active material layer,
wherein:
the negative electrode active material layer includes a negative electrode active material, and the negative electrode active material consists of silicon; and
in a graph of capacity-voltage measured by manufacturing a half-cell including the positive electrode and a lithium metal electrode and then discharging the half-cell at a constant current of 0.1 C, an inflection point appears in a region in which a voltage is 3.3 V to 3.7 V, and the capacity of the positive electrode at the inflection point is 3% to 25% of the capacity of the positive electrode at a final charge voltage.

2. The lithium secondary battery of claim 1, wherein the positive electrode active material layer comprises a positive electrode active material, and the positive electrode active material includes a lithium nickel-based oxide and a lithium iron phosphate, wherein the lithium iron phosphate is included in an amount of 5 parts by weight to 20 parts by weight based on 100 parts by weight of the lithium nickel-based oxide.

3. The lithium secondary battery of claim 1, wherein the discharge potential value of the negative electrode at a cut-off voltage of the lithium secondary battery is 0.6 V or less.

4. The lithium secondary battery of claim 1, wherein the average particle diameter D₅₀ of the silicon is 5 µm to 20 µm.

5. The lithium secondary battery of claim 1, wherein the BET specific surface area of the silicon is 0.1 m²/g to 5 m²/g.

6. The lithium secondary battery of claim 2, wherein the lithium nickel-based oxide is a compound represented by Formula 1 below:
[Formula 1] Liₓ[Ni_{y}Co_{z}M¹_{w}M²ᵥ]O₂₋ₚAₚ
(wherein in Formula 1 above, M¹ is Mn, Al, or a combination thereof, M² is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, A is one or more elements selected from the group consisting of F, Cl, Br, I, At, and S, and 1.0≤x≤1.30, 0.3≤y<1, 0<z≤0.6, 0<w≤0.6, 0≤v≤0.2, and 0≤p≤0.2.)

7. The lithium secondary battery of claim 2, wherein the average particle diameter D₅₀ of the lithium nickel-based oxide is 4 µm to 20 µm.

8. The lithium secondary battery of claim 2, wherein the lithium iron phosphate is a compound represented by Formula 2 below:
[Formula 2] Li₁₊ₐFe_{1-b}M_{b}(PO_{4-c})X_{c}
(wherein in Formula 2 above, M includes one or more elements selected from the group consisting of Al, Mg, Ni, Co, Mn, Ti, Ga, Cu, V, Nb, Zr, Ce, In, Zn, and Y, X includes any one or two or more elements selected from the group consisting of F, S, and N, and a, b, and c are respectively -0.5≤a≤0.5, 0≤b≤0.5, and 0≤c≤0.1.)

9. The lithium secondary battery of claim 2, wherein the average particle diameter D₅₀ of the lithium iron phosphate is 3 µm to 10 µm.

10. The lithium secondary battery of claim 2, wherein the ratio of the average particle diameter D₅₀ of the lithium nickel-based oxide to the average particle diameter D₅₀ of the lithium iron phosphate is 0.5 to 1.5.

11. The lithium secondary battery of claim 1, wherein the energy density of the lithium secondary battery is 650 Wh/L or greater.
